# EUROPÄISCHE PATENTSCHRIFT

(11) **EP 1 121 627 B1**
(45) Veröffentlichungstag und Bekanntmachung des Hinweises auf die Patenterteilung: **07.05.2003**
(21) Anmeldenummer: 99970744.1
(22) Anmeldetag: 15.10.1999
(51) Int. Cl.: G05B 19/409, B29C 45/76, G05B 19/414

(54) **VERFAHREN ZUR REGELUNG EINER ANTRIEBSEINHEIT FÜR EINE SPRITZGIESSMASCHINE ZUR VERARBEITUNG VON KUNSTSTOFFEN SOWIE VORRICHTUNG ZUR DURCHFÜHRUNG DIESES VERFAHRENS**
METHOD FOR REGULATING A DRIVE UNIT FOR AN INJECTION MOLDING MACHINE FOR PROCESSING PLASTIC MATERIALS, AND A DEVICE FOR CARRYING OUT SAID METHOD
PROCEDE DE REGULATION DE L'UNITE D'ENTRAINEMENT D'UNE MACHINE DE MOULAGE PAR INJECTION POUR LE TRAVAIL DE MATIERES PLASTIQUES, ET DISPOSITIF POUR LA MISE EN OEUVRE DE CE PROCEDE

(30) Priorität: 19.10.1998 DE 19847908
(43) Veröffentlichungstag der Anmeldung: 08.08.2001
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9907823
(87) Internationale Veröffentlichungsnummer: WO00023858

(56) Entgegenhaltungen:
- EP-A- 0 070 654
- EP-A- 0 600 263
- EP-A- 0 643 472
- DE-A- 3 928 451
- DE-C- 4 409 823

## Beschreibung

Die Erfindung betrifft ein Verfahren zur Regelung einer Antriebseinheit für eine Spritzgießmaschine zur Verarbeitung von Kunststoffen und anderer plastifizierbarer Materialien nach dem Oberbegriff des Anspruches 1.

In den letzten Jahren wurden mehr und mehr elektromechanisch angetriebene Spritzgießmaschinen hergestellt, wobei Ausgangspunkt die vorbekannten hydraulisch angetriebenen Spritzgießmaschinen waren. Insofern wurde oft lediglich der hydraulische zentrale Antrieb sukzessive ersetzt durch dezentral angelegte elektromechanische Antriebe bestehend aus Motor und Getriebe. Die Leistungselektronik zur Versorgung der an den einzelnen Antrieben vorgesehenen servogeregelten Motoren befindet sich jedoch zentral in einem Schaltschrank, während Sensoren für Wegmessung, Drehmomentaufnehmer und Drucksensoren außerhalb des Getriebemotors direkt am vom Antriebsmotor betätigten Element vorhanden sind.

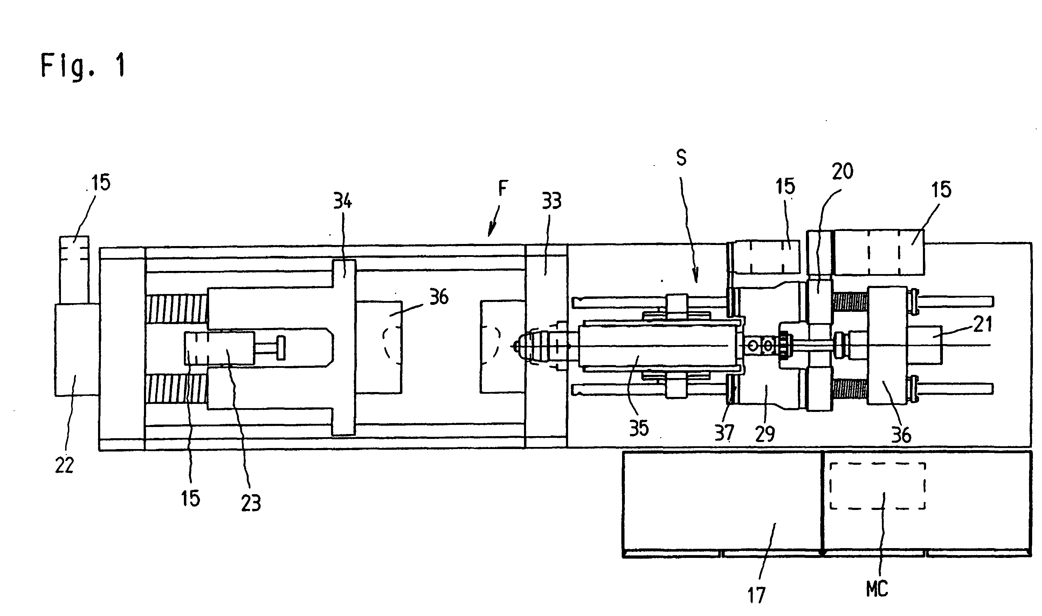

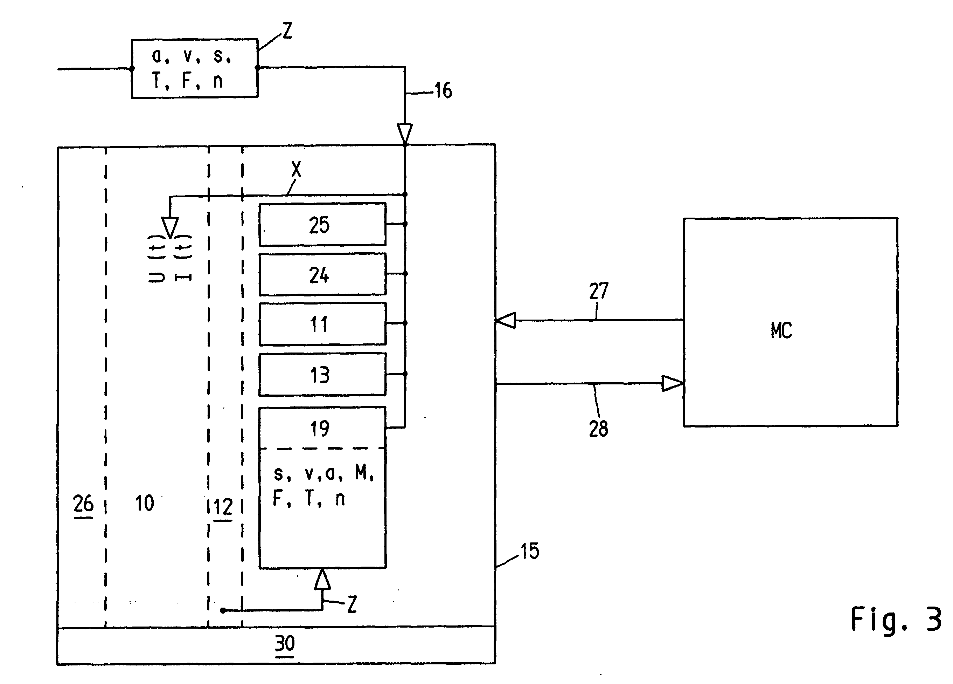

In DE 44 29 304 C1 und EP 0 643 472 A1 wurde ein Regelantrieb für mehrere Regelgrößen an einer Spritzgießmaschine vorgeschlagen, bei dem eine Steuerung unabhängig vom Maschinenrechner vorgesehen ist. Diese Steuerung befindet sich zwar vor Ort in der Nähe der Antriebe, jedoch nicht am Antrieb. Zwar soll ein unmittelbares Zusammenwirken vor Ort, nämlich in dem Drive von jeder Steuer- und Regelfunktion erfolgen und den - mehreren - Drives ist eine gemeinsame Kontrolleinheit bzw. ein gemeinsamer Prozeßrechner unmittelbar zugeordnet, so daß alle unmittelbar benötigten Werte als ganze Rezepte oder Programme vor Ort verfügbar sind. Allerdings ergibt sich dort aus Fig. 1 auf Seite 5 oben, erster Absatz und auch im Hinblick auf die Fig. 3, Seite 5, Zeilen 31-40, daß die eigentliche Intelligenz bzw. Steuerung des dort dargestellten Mehrgrößenreglers, wie z.B. in Fig. 1 durch die unterbrochenen Leitungen zwischen Antriebsmotor 1 und Drive-Rechner 22 angedeutet, vom Antriebsmotor getrennt ist. Dies muß umsomehr gelten, wenn der Mehrgrößenregler gemäß Fig. 3 als Steuerung für mehrere Achsen verwendet wird. Der Mehrgrößenregler mit seinem Signalrechner und Prozeßrechner erlaubt eine verzögerungsfreie, selektive Steuerung oder Regelung der Regelgrößen, es werden jedoch einzelne Größen als Leitgrößen zu umgehen. Eine Rückmeldung bei nicht mehr von der vor Ort befindlichen Steuerung erfassbaren Abweichungen an die Maschinensteuerung oder gar eine Kommunikation zwischen einzelnen Antriebseinheiten ist nicht vorgesehen.

Aus der DE 39 28 451 A1 ist ein intelligentes Steuer- und Regelsystem bekannt, bei dem jeder Antriebseinheit eine Steuerung im gleichen Gehäuse zugeordnet ist. Ein externer Steuerrechner übergibt nur die Sollvorgaben für die Antriebsaufgabe. Das System arbeitet so lange autonom, bis entweder eine Störmeldung an den - übergeordneten - Kontrollrechner gegeben wird, oder der Kontrollrechner eine Änderung der Parametrierung bewirkt. Die einzelnen Antriebseinheiten sind zwar untereinander zur Kommunikation verbunden, dennoch kann nur der Steuerrechner das gesamte System überschauen und bei einer Störmeldung reagieren.

Aus der US-A 5,062,053 und der US-A 5,518,671 sind ferner Steuerungen bekannt, wobei zwar eine übergeordnete Überwachung in Form einer Maschinensteuerung vorgesehen ist, die Steuerung für die einzelnen Elemente jedoch selbst noch zentralisiert an der Spritzgießmaschine angeordnet sind.

Als das Prinzip der verteilten Intelligenz aufkam, wurde z.B. in der DE 38 02 254 C2 vorgeschlagen, jeder Antriebseinheit eine Mikroprozessoreinheit zuzuordnen, so daß diese Befehle empfangen und Signale zurücksenden kann. Ergänzend wurde eine Datenringleitung vorgeschlagen, um die einzelnen Antriebe mit der zentral im Steuerschrank befindlichen Maschinensteuerung zu verbinden, wobei jede Antriebseinheit in der Lage war, die sie betreffenden, codierten Daten aus der Datenringleitung herauszulesen. Das Prinzip der verteilten Intelligenz bedeutet jedoch, daß ständig Signale zwischen den vor Ort sitzenden Mikroprozessoreinheiten und der zentralen Maschinensteuerung ausgetauscht werden.

Ausgehend von diesem Stand der Technik liegt der vorliegenden Erfindung die Aufgabe zugrunde, ein Verfahren sowie eine Vorrichtung zur Regelung eines Antriebs für eine Kunststoff-Spritzgießmaschine zu schaffen, bei dem die Steuerelektronik und damit die Intelligenz an der jeweiligen Antriebseinheit komprimiert ist, so daß diese weitestgehend unabhängig von der Maschinensteuerung arbeiten kann.

Diese Aufgabe wird durch ein Verfahren mit den Merkmalen des Anspruches 1 gelöst.

Vorzugsweise wird damit ein selbst optimierendes System geschaffen, welches Abweichungen von Sollkurvenverläufen selbständig ausgleichen kann. Der an der jeweiligen Antriebseinheit vorhandenen Steuerung werden die Sollkurvenverläufe und bedarfsweise auch die zugehörigen Toleranzen vorgegeben, so daß vor Ort die Regelung der Antriebseinheit möglich ist. Der Motor bekommt also nur die von ihm betriebene äussere Last, bzw. die dadurch hervorgerufenen Reaktionskräfte zu spüren. Er "sieht" quasi seine Wirkung. Femer erhält er nur noch einen Steuerimpuls, die Regelung jedoch macht der Motor selbst. Sobald daher von der Maschinensteuerung selbst ein komplexer Befehl gegeben wird, befolgt der Antrieb diesen Befehl eigenständig. Die einzelnen Antriebseinheiten kommunizieren untereinander und geben insofern Signale oder Ist-Informationen untereinander weiter, ohne daß Signale an die Maschinensteuerung zurückgereicht werden. Erst wenn es zu Störungen, Abweichungen oder anderen Problemen kommt, mit denen die Antriebseinheiten allein nicht mehr fertig werden, wird die Maschinensteuerung informiert, die wie ein übergeordnetes Aufsichtsorgan dann entscheiden kann, ob sie noch in der Lage ist, den Spritzzyklus positiv zu beeinflussen oder bedarfsweise ein Alarmsignal an Bedienungsperson oder Leitrechner gibt.

Mit dieser Komprimierung der Steuerung vor Ort sind weitere Vorteile verbunden. Der Verkabelungsaufwand kann reduziert werden, was einhergeht mit geringeren Verlusten infolge von Leitungslängen. Da weniger Schnittstellen erforderlich sind, werden Fehlerquellen beim Beschalten der Einheiten minimiert. Die kurzen Wege ermöglichen schnellere Auswertungen der Regelparameter und damit ein schnelleres Reagieren der Spritzgießmaschine auf äußere Einflüsse, so daß die Zykluszeiten reduziert werden.

Da jede Antriebseinheit im Prinzip autark ist, kann sie selbst feststellen, ob mehr oder weniger Energie bei gleichen Zyklen verbraucht wird, was nicht nur zur Energieeinsparung beitragen kann, sondern gleichzeitig ein Indiz für einen zunehmenden Verschleiß sein kann, so daß sich von selbst eine Verschleißkontrolle der jeweiligen Antriebseinheit ergibt. Da der Hauptrechner selbst entlastet ist, ergeben sich schnellere Schaltzeiten, was die Zykluszeiten reduziert.

Wird eine entsprechende Sensorik in Motor und Getriebe vorgesehen, kann die Regelelektronik im Motor tatsächlich unabhängig von äußeren Einflüssen Regelungenauigkeiten minimieren bzw. auf äußere Einflüsse besser reagieren. Gleichzeitig können an einer derartigen Antriebseinheit Antriebsmotor, Getriebe und Leistungsteile im Verbund z.B. flüssigkeitsgekühlt werden. Da Motoren und Getriebe meist ohnehin gekühlt werden müssen, ist der Aufwand vor Ort gering, während die zusätzliche Schaltschrankkühlung zumindest reduziert werden, wenn nicht ganz entfallen kann.

Grundsätzlich kann der Antriebsmotor für sich autark arbeiten, jedoch kann er auch mit seiner Regelelektronik auf Meldungen der äusseren Sensorik reagieren. Es kann sich dabei um Rückmeldungen der Antriebseinheit selbst außerhalb des Antriebsmotors handeln. Genauso kann er aber auf von der Antriebseinheit unabhängige Parameter mit seiner Regelstrecke reagieren.

Im folgenden wird die Erfindung anhand eines Ausführungsbeispiels näher erläutert. Es zeigen:
- Fig. 1: Eine Draufsicht auf eine Spritzgießmaschine,
- Fig. 2: eine schematische Darstellung der mit einer Steuerung versehenen Antriebseinheit,
- Fig. 3: eine schematische Darstellung des Zusammenspiels zwischen Maschinensteuerung und Steuerung vor Ort,
- Fig. 4: mehrere miteinander verknüpfte Antriebseinheiten,
- Fig. 5: eine Darstellung gemäß Fig. 4, wobei die Antriebseinheiten über eine Datenringleitung miteinander verknüpft sind.

Fig. 1 zeigt eine Spritzgießmaschine zur Verarbeitung von Kunststoffen und anderer plastifizierbarer Massen wie z.B. keramische Massen oder pulvrige Massen. Auf der linken Seite ist eine Formschließeinheit F angeordnet, wobei über eine Bewegungseinheit 22 ein beweglicher Formträger 34 auf einen stationären Formträger 33 zu und von diesem weg bewegbar ist. Bei dieser Formschlußbewegung wird eine Spritzgießform 36 geschlossen und wieder geöffnet. Zum Auswerfen von Spritzteilen aus der Form ist eine Bewegungseinheit 23 in Form eines Auswerfers vorgesehen. Auf der rechten Seite der Spritzgießmaschine ist eine Spritzgießeinheit S angeordnet. Diese Spritzgießeinheit besitzt einen Plastifizierzylinder 35, der an einem Trägerblock 29 festgelegt ist. An einer Einspritzbrücke 36 ist eine im Plastifizierzylinder aufgenommene Förderschnecke angeordnet, die über eine Bewegungseinheit 21 den Rotationsmotor rotiert und über eine Bewegungseinheit 20 im Plastifizierzylinder axial bewegt wird. Femer ist eine Düsenfahreinheit 37 vorgesehen.

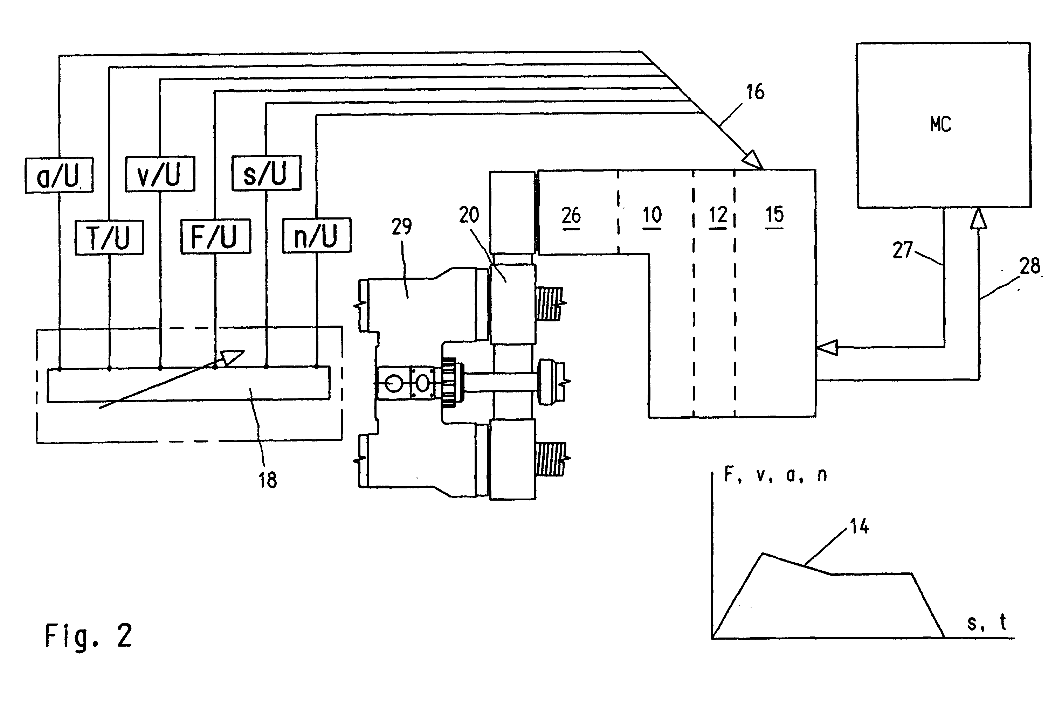

Die Bewegungseinheiten 20,21,22,23 sowie die Düsenfahreinheit 37 besitzen jeweils eigene Steuerungen 15, die mit einer im Schaltschrank 17 angeordneten Maschinensteuerung MC in Verbindung stehen. Die Verbindung erfolgt gemäß Fig. 2, 3 über eine Signalleitung 27, mit der von der Maschinensteuerung MC z.B. Sollwertverläufe sowie zugehörige Toleranzbereiche an die Steuerung 15 vor Ort vorgegeben werden können. Ferner besteht eine Rücksignalleitung 28, über die Rückmeldungen oder Fehlersignale von der Steuerung 15 vor Ort an die Maschinensteuerung MC zurückgereicht werden können. Obwohl schematisch die Signalleitung 27 und die Rücksignalleitung 28 als gesonderte Leitungen dargestellt sind, versteht sich von selbst, daß diese in einer gemeinsamen Leitung zusammengefaßt werden können. Ebenso läßt sich dieses Prinzip einsetzen, wenn an einer Spritzgießmaschine nur ein Teil der Antriebe als elektromechanische Einheiten aufgebaut ist. Der Begriff "Leitung" ist im weitesten Sinne als Verbindung zur Übertragung von Signalen zu verstehen, wobei auch an drahtlose Verbindungen und kodierte Übertragungen zu denken ist.

Gemäß Fig. 2, 3 besitzt jede Antriebseinheit, in Fig. 3 die Antriebseinheit 30, einen Antriebsmotor 10 zur Bewegung der Bewegungseinheiten 20,21,22,23 der Spritzgießmaschine. Die Maschinensteuerung gibt zur Betätigung zumindest des Antriebsmotors 10 selbst Sollwertvedäufe 14 gemäß Fig. 2 über die Signalleitung 27 als Prozeßstellkurve vor. Die Steuerung 15 vor Ort besitzt einen Speicher 25 sowie einen Rechner 24, der entsprechende Sollwertverläufe und Istwertverläufe verarbeiten und miteinander vergleichen kann. Dem Motor 10 und bedarfsweise einem Getriebe ist ein Meßerfassungssystem 12 zugeordnet, das eine entsprechende Sensorik im Motor und im Getriebe aufweist. Dieses Meßerfassungssystem ermittelt Istwerte, bzw. den Istzustand zumindest des Antriebsmotors 10, so daß die Steuerung vor Ort aufgrund der Ist-Informationen z zur Erstellung von Istwertverläufen in der Lage ist. Eine Reglereinheit 11 in der Steuerung 15 vor Ort vergleicht die Sollwertverläufe 14 und erzeugt hieraus mittels des Rechners 24 Stellsignale x zur Regelung zumindest des Antriebsmotors. Ein Stellglied 13 wird von den Stellsignalen x so beeinflußt, daß sich entsprechende Stellsignale U(t), I(t) für den Antriebsmotor 10 ergeben. Diese können über den Drehmomentwandler 26 in entsprechende Bewegungen der Antriebseinheit umgewandelt werden.

Die Maschinensteuerung MC übergibt vorzugsweise vor Betätigung des Antriebsmotors 10 die Sollwertverläufe 14 zur von der Maschinensteuerung unabhängigen Betätigung der Antriebseinheit an die vor Ort befindliche Steuerung 15. Da dort sämtliche zur Bearbeitung dieser Sollwertverläufe 14 notwendigen Einheiten, wie die Reglereinheit 11 als auch das Meßerfassungssystem 12 vorgesehen sind, können dort die Stellsignale x unmittelbar an das Stellglied 13 weitergegeben werden. Eine Rückmeldung von der Steuerung 15 vor Ort an die Maschinensteuerung MC erfolgt erst, wenn nicht mehr beherrschbare Abweichungen vom Sollwertverlauf 14 auftreten.

Über das Meßerfassungssystem 12 kann der Antriebsmotor zunächst unabhängig von äußeren Einflüssen eine innere Regelstrecke im Motor selbst und im Getriebe aufbauen. Dadurch ist eine Energiemessung nicht nur zur Energieeinsparung, sondern auch zur Messung des Energieaufwandes pro Motor möglich, so daß sich zugleich eine Verschleißkontrolle ergibt. Die Antriebseinheit selbst ist ein adaptives selbstoptimierendes System, das Abweichungen von den Sollkurvenverläufen selbständig ausgleichen kann. Dies ist mehr als eine bloße Regelung. Die Antriebseinheit kann aus den Vorgaben z.B. ihre eigenen angepaßten Sollwerte berechnen, um die Istwerte positiv zu beeinflussen. Ebenso kann sie bewertend die Sollwertvertäufe ändern, um bessere Ergebnisse zu erzielen, und dies sogar Arbeitseinheit-übergreifend. Da die Maschinensteuerung MC nicht mehr dauernd mit Regelaufgaben belastet wird, ergeben sich schnelle Schaltzeiten, da der Hauptrechner entlastet ist. Der Antriebsmotor 10 oder besser gesagt die Steuerung 15 bekommt nur die angetriebene Last bzw. die Reaktionskräfte zu spüren und erhält einen Steuerimpuls, sobald der Antriebsmotor benötigt wird, die Regelung jedoch macht der Motor selbst, so daß er quasi seinen Einfluß selbst korrigieren kann. Selbst wenn die Maschinensteuerung MC der Antriebseinheit einen komplexen Befehl vorgibt, wird dieser eigenständig befolgt. Erst bei Störungen erzeugt die Steuerung 15 vor Ort Meldungen an die Maschinensteuerung, d.h. bei Unregelmäßigkeiten wird die übergeordnete Maschinensteuerung informiert.

Mit dieser Komprimierung von Intelligenz vor Ort geht einher eine Einsparung an Verkabelungsaufwand und eine Reduzierung von Verlusten infolge verkürzter Übertragungswege. Beim Beschalten der Antriebseinheit werden Fehlerquellen durch Schnittstellenminimierung reduziert und die kurzen Übertragungswege ermöglichen auch eine schnellere Auswertung der Regelparameter. An Ist-Informationen z können von den Meßerfassungssystemen 12,16 der Weg s, die Geschwindigkeit v, die Beschleunigung a, das Drehmoment M, die Kraft F, die Temperatur T, die Drehzahl n oder dergleichen übergeben werden. Diese Ist-Informationen werden in der Steuerung 15 vor Ort über einen Wandler 19 in für den Rechner 24 verarbeitbare Signale umgesetzt. Außer dem intemen Meßerfassungssystem 12 kann ein externes Meßerfassungssystem 16 vorgesehen sein. Hiermit werden Istwerte z.B. von der gesamten Antriebseinheit und nicht nur von Motor und Getriebe zurückgemeldet. Dies kann über die in Figur 2 schematisch dargestellten Spannungswandler 18 geschehen. Damit wird die Regelstrecke auch externen Einflüssen zugänglich gemacht.

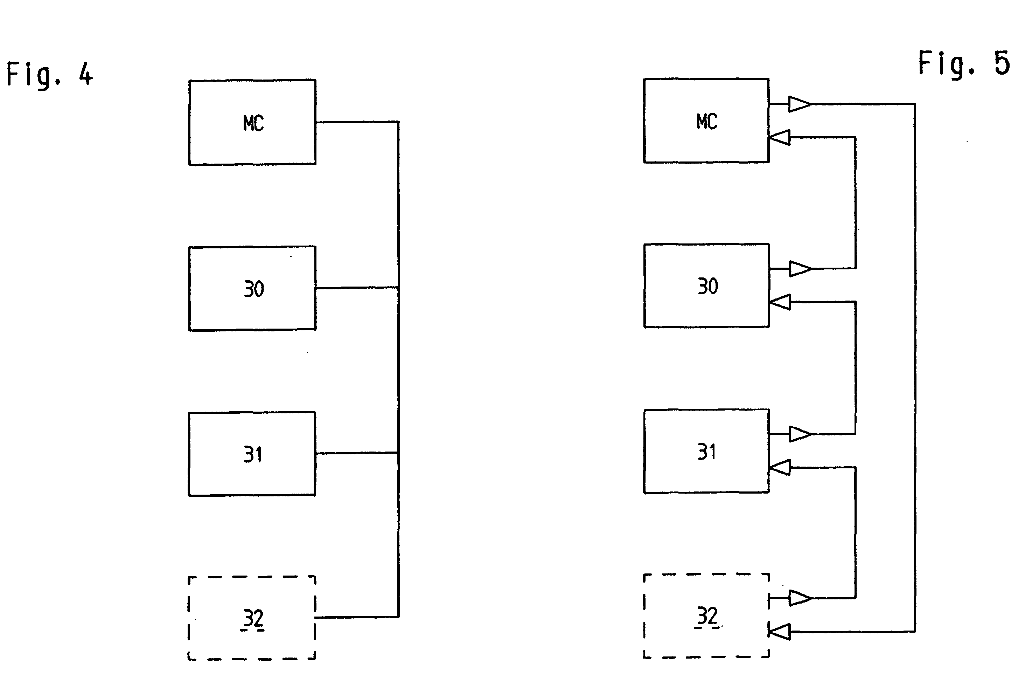

Gemäß Fig. 4, 5 können die Antriebseinheiten z.B. der Spritzgießeinheit unmittelbar miteinander kommunizieren. Hierzu können die Antriebseinheiten 30,31 und beliebige weitere Antriebseinheiten 32 gemäß Fig. 4 über eine Signalleitung mit der Maschinensteuerung MC verbunden sein. Der Aufhau ist so, daß die Antriebseinheiten untereinander zur Kommunikation miteinander verbunden sind. Die Kommunikation kann so weit gehen, daß Signale und Ist-Informationen untereinander weitergegeben und von anderen Antriebseinheiten mitbenutzt werden, um z.B. eine von der Maschinensteuerung MC unabhängige Synchronisation verschiedener Antriebe oder serielle und/oder parallele Abläufe zu erzielen, in denen die verschiedenen Antriebseinheiten in Abhängigkeit aufeinander warten oder zusammenwirken müssen. Dieses Zusammenwirken führt zu einer optimalen Ermittlung des Ist-Zustandes und zur Ausnutzung vorhandener Kapazitäten. Dies erfolgt vorzugsweise, ohne daß Signale an die Maschinensteuerung zurückgereicht werden. Erst wenn die Antriebseinheiten 30,31,32 bei auftretenden Abweichungen oder Störungen der Lage nicht mehr Herr werden, geben die Steuerungen 15 vor Ort eine Rückmeldung an die Maschinensteuerung MC, die z.B. eine Fehlermeldung sein kann, die die Maschinensteuerung veranlaßt, wie ein übergeordnetes Aufsichtsorgan zu entscheiden, ob sie noch in der Lage ist, den Spritzzyklus positiv zu beeinflussen oder bedarfsweise ein Alarmsignal an Bedienungsperson oder Leitrechner zu geben.

Die Antriebseinheit selbst umfaßt Antriebsmotor 10 sowie Steuerung 15 vor Ort mit allen zur Ermöglichung einer Regelung notwendigen Bauteilen. Die Antriebseinheit wird mit ihrer Steuerung 15 zu einer kompakten baulichen Einheit verbunden, so daß sie im Werk des Herstellers vorgefertigt und bedarfsweise für sich an entfernte Stellen dieser Erde versandt werden kann. Vor Ort ist kein qualifiziertes Personal zum Anschluß der Antriebseinheit an die Spritzgießmaschine erforderlich, da nur eine Signalund eine Versorgungsverbindung mit der Antriebseinheit herzustellen ist, die ansonsten unabhängig arbeiten kann. Dies trägt nicht nur zur Verringerung des Wartungsaufwandes, sondern auch zur Zufriedenheit des Kunden bei, da bedarfsweise schnell eine komplette Antriebseinheit ausgetauscht werden kann. Fehlerquellen beim Anschließen derartiger Einheiten werden verringert. Der kompakte Aufhau ermöglicht eine Flüssigkeitskühlung nicht nur von Motor 10 und Getriebe, sondern auch der vor Ort befindlichen Steuerung 15, also der dortigen Leistungsteile im Verbund, so daß der Aufwand für die Kühlung des Schaltschranks verringert werden kann und auf die bereits bei Motor und Getriebe vorhandenen Kühlungen zurückgegriffen wird.

## Patentansprüche

1. Verfahren zur Regelung einer Antriebseinheit an einer Spritzgießmaschine zur Verarbeitung von Kunststoffen und anderer plastifizierbarer Materialien mit
- einem Antriebsmotor (10) zur Bewegung von Bewegungseinheiten (20,21,22,23) der Spritzgießmaschine,
- einer Maschinensteuerung (MC), die Sollwertverläufe (14) für die Betätigung zumindest des Antriebsmotors (10) vorgibt,
- einem Gebersystem (12), das den Istzustand zumindest des Antriebsmotors (10) erfaßt und Ist-Informationen (z) zur Erstellung von Istwertverläufen meldet,
- wenigstens einer Reglereinheit, die die Sollwertverläufe (14) mit den Istwertverläufen vergleicht und hieraus Stellsignale (x) zur Regelung zumindest des Antriebsmotors (10) erzeugt,
- wenigstens einem Stellglied (13), das den Antriebsmotor (10) in Abhängigkeit von den Stellsignalen (x) beeinflußt,
- wobei die Maschinensteuerung (MC) die Sollwertverläufe (14) zur von der Maschinensteuerung (MC) unabhängigen Betätigung der Antriebseinheit an eine vor Ort befindliche Steuerung (15) übergibt, die die Reglereinheit (11) umfaßt und an die das Meßerfassungssystem (12) seine Ist-Informationen (z) übergibt und die Stellsignale (x) an das Stellglied (13) gibt,
**dadurch gekennzeichnet, daß** die vor Ort befindliche Steuerung (15) am Antriebsmotor (10) vorgesehen ist, daß Steuerungen (15) mehrerer Antriebseinheiten (30,31,32) untereinander zur Kommunikation verbunden sind und daß von einer Steuerung (15) vor Ort nicht mehr beherrschbare Abweichungen vom Sollwertverlauf erst dann zu einer Rückmeldung an die Maschinensteuerung (MC) führen, wenn auftretende Abweichungen auch von den Steuerungen (15) vor Ort zusammen nicht mehr allein beherrschbar sind.

2. Verfahren nach Anspruch 1, **dadurch gekennzeichnet, daß** die Antriebseinheiten (30,31,32) bei der Kommunikation auch die ermittelten Ist-Informationen (z) und bedarfsweise Sollwertverläufe zur gemeinsamen Verwertung untereinander austauschen.

3. Verfahren nach Anspruch 1, **dadurch gekennzeichnet, daß** die Rückmeldung eine Fehlermeldung ist, die zu einem Eingreifen der Maschinensteuerung (MC) führt.

4. Verfahren nach einem der Ansprüche 1 bis 3, **dadurch gekennzeichnet, daß** ein externes Meßerfassungssystem (16) den Istzustand der vom Antriebsmotor (10) angetriebenen Antriebseinheit erfaßt und an die Steuerung (15) vor Ort meldet.

## Claims

1. A method of regulating a drive unit in an injection moulding machine for the processing of synthetic materials and other plasticizable materials comprising
- a drive motor (10) for moving the mover units (20, 21, 22, 23) of the injection moulding machine,
- a machine control system (MC) which provides reference value curves (14) for the actuation of at least the drive motor (10),
- a transmitting system (12) which determines the actual state of at least the drive motor (10) and produces the information regarding the actual state (z) required for the production of actual value curves,
- at least one regulating unit which compares the reference value curves (14) with the actual value curves and produces therefrom adjusting signals (x) for the regulation of at least the drive motor (10),
- at least one adjusting member (13) which controls the drive motor (10) in dependence on the adjusting signals (x),
- wherein the machine control system (MC) sends the reference value curves (14) for the actuation of the drive unit independently of the machine control system (MC) to a local control system (15) which comprises the regulating unit (11) and to which the measuring system (12) sends its information regarding the actual state (z) and transmits the adjusting signals (x) to the adjusting member (13),
**characterised in that** the local control system (15) is provided on the drive motor (10), **in that** the control systems (15) of a plurality of drive units (30, 31, 32) are connected together for communication purposes and **in that** deviations from the reference value curve which can no longer be controlled by a local control system (15) only lead to the sending of a return message to the machine control system (MC) if the deviations occurring can no longer be controlled even by all of the local control systems (15) together.

2. A method in accordance with Claim 1, **characterised in that**, in the course of the communication, the drive units (30, 31, 32) also exchange amongst each other the detected information regarding the actual state (z) and, if necessary, the reference value curves for the purposes of common evaluation.

3. A method in accordance with Claim 1, **characterised in that** the return message is an error message which leads to the intervention of the machine control system (MC).

4. A method in accordance with any of the Claims 1 to 3, **characterised in that** an external measuring system (16) determines the actual state of the drive unit driven by the drive motor (10) and reports to the local control system (15).

## Revendications

1. Procédé de régulation d'une unité d'entraînement sur une machine de moulage par injection pour le travail de matières plastiques et d'autres matières plastifiables comprenant
- un moteur de commande (10) pour le déplacement d'unités de déplacement (20, 21, 22, 23) de la machine de moulage par injection,
- une commande de machine (MC), qui prédéfinit des courbes de valeurs de consigne (14) pour l'actionnement d'au moins le moteur de commande (10),
- un système de capteur (12), qui enregistre l'état effectif d'au moins le moteur de commande (10) et signale des informations effectives (z) pour l'établissement de courbes de valeurs effectives,
- au moins une unité de régulation, qui compare les courbes de valeurs de consigne (14) avec les courbes de valeurs effectives, et en génère des signaux de réglage (x) pour la régulation d'au moins le moteur de commande (10),
- au moins un organe de réglage (13), qui influence le moteur de commande (10) en fonction des signaux de réglage (x),
- la commande de machine (MC) transmettant les courbes de valeurs de consigne (14), pour l'actionnement de l'unité d'entraînement indépendant de la commande de machine (MC), à une commande (15) située sur place, qui comprend l'unité de régulation (11) et à laquelle le système d'enregistrement de mesures (12) transmet ses informations effectives (z) et qui fournit des signaux de réglage (x) à l'organe de réglage (13),
**caractérisé en ce que** la commande (15) située sur place est prévue sur le moteur de commande (10), **en ce que** des commandes (15) de plusieurs unités d'entraînement (30, 31, 32) sont reliées entre elles pour la communication, et **en ce que** des écarts par rapport à la courbe de valeur de consigne, qui ne sont plus maîtrisables par une commande (15) sur place, ne provoquent un rétrosignal à la commande de machine (MC) que lorsque des écarts en présence ne sont plus maîtrisables, également par les commandes (15) sur place dans leur ensemble.

2. Procédé suivant la revendication 1, **caractérisé en ce que** les unités d'entraînement (30, 31 ,32) échangent entre elles lors de la communication également les informations effectives (z) déterminées et en cas de besoin des courbes de valeurs de consigne pour l'exploitation commune.

3. Procédé suivant la revendication 1, **caractérisé en ce que** le rétrosignal est un message d'erreur, qui provoque une intervention de la commande de machine (MC).

4. Procédé suivant l'une des revendications 1 à 3, **caractérisé en ce qu'**un système d'enregistrement de mesures (16) externe enregistre l'état effectif de l'unité d'entraînement, entraînée par le moteur de commande (10), et le signale à la commande (15) sur place.
